# EUROPÄISCHE PATENTSCHRIFT

(11) **EP 0 873 378 B1**
(45) Veröffentlichungstag und Bekanntmachung des Hinweises auf die Patenterteilung: **24.11.1999**
(21) Anmeldenummer: 96944624.4
(22) Anmeldetag: 20.12.1996
(51) Int. Cl.: C09D 7/12

(54) **FLÜSSIGKONFEKTIONIERUNG VON VERDICKUNGSMITTELN (II)**
LIQUID PREPARATION OF THICKENING AGENTS (II)
PREPARATION LIQUIDE D'EPAISSISSANTS (II)

(30) Priorität: 09.01.1996 DE 19600467
(43) Veröffentlichungstag der Anmeldung: 28.10.1998
(73) Patentinhaber: Cognis Deutschland GmbH, 40589 Düsseldorf (DE)
(72) Erfinder: CONRADI, Joachim, D-40589 Düsseldorf (DE); ENGELS, Thomas, D-50226 Frechen (DE); GRESS, Wolfgang, D-42111 Wuppertal (DE); NEUMANN, Ralf, D-42781 Ratingen (DE); VON RYBINSKI, Wolfgang, D-40593 Düsseldorf (DE); SCHIEFERSTEIN, Ludwig, D-40882 Ratingen (DE); SCHULTE, Heinz-Günther, D-45481 Mülheim (DE)
(86) Internationale Anmeldenummer: EP9605786
(87) Internationale Veröffentlichungsnummer: WO9725382

(56) Entgegenhaltungen:
- EP-A- 0 339 712

## Beschreibung

### Gebiet der Erfindung

Die Erfindung betrifft Hilfsmittel zur Flüssigkonfektionierung wäßriger Verdikkungsmittel, insbesondere auf Polyurethanbasis, sowie damit hergestellte, wäßrige Verdickungsmittelzubereitungen. Weiterhin betrifft die Erfindung die Verwendung solcher Verdickungsmittelzubereitungen in zu verdickenden Systemen wie beispielsweise wäßrigen Dispersionsfarben.

### Stand der Technik

Verdickungsmittel auf Polyurethanbasis, insbesondere solche, deren verdickende Eigenschaften sich durch einen assoziativen Wirkmechanismus beschreiben lassen, eignen sich als Hilfsmittel für die Einstellung rheologischer Eigenschaften von wäßrigen Systemen wie beispielsweise Auto- und Industrielacken, Putz- und Anstrichfarben, Druck- und Textilfarben, Pigmentdruckpasten, pharmazeutischen und kosmetischen Zubereitungen, Pflanzenschutzformulierungen sowie Füllstoffdispersionen. Das Wirkprinzip solcher Verdicker ist beispielsweise in ***Polymers Paint Colour Journal,*** **181, 270 (1991)** beschrieben. Außer den Polyurethanen lassen sich ebenso ethoxilierte Fettalkohole, die zusätzlich blockweise oder statistisch mit einem geringen Anteil langkettiger Epoxide umgesetzt wurden oder nichtionische Polyacrylate oder Polyacrylamide, die teilweise mit langkettigen Fettalkoholen verestert sind odcr auch mit langen Alkylketten veretherte Cellulosederivate, als nach dem assoziativen Mechanismus wirkende Verdicker in wässrigen Systemen einsetzen. In zunehmendem Maße substituieren oder ergänzen sie die traditionell als Verdicker in Farben und Lacken eingesetzten Celluloseether sowie die traditionellen, alkalilöslichen Polyacrylate.
Die assoziativen Verdicker weisen gegenüber den herkömmlichen Verdickersystemen eine Reihe von Vorteilen auf, wie z.B.
- geringere Viskosität beim Einarbeiten,
- geringere Spritzneigung beim Verstreichen,
- besserer Farbverlauf,
- höherer Glanz durch weniger Flokkulation,
- geringere Wasserempfindlichkeit der Beschichtungen,
- geringere Anfälligkeit gegenüber mikrobiellem Befall,
- möglichst geringer Abfall der Viskosität in den verdickten Dispersionen unter Scherung, näherungsweise Newton'sches Fließverhalten

Die Herstellung und Verwendung solcher Verdicker wird beispielsweise in der **US-A 40 79 028** oder in der **US-A 44 26 485** beschrieben.

Obwohl die Verdicker auf Polyurethanbasis bei gleicher Verdickungswirkung eine weitaus geringere Eigenviskosität als Polyacrylate oder Celluloseether aufweisen, bereitet die Konfektionierung flüssiger Verdickungsmittelzubereitung auf Polyurethanbasis immer noch Schwierigkeiten. Die bekannten Polyurethanver-dicker besitzen in Form ihrer wäßrigen Lösungen eine sehr hohe Eigenviskosität, welche die Einarbeitung in wäßrige Systeme sehr erschwert.
Zur Verringerung der Eigenviskosität der Polyurethanverdicker wurden in der Vergangenheit viele Versuche unternommen. So wurde z.B. das Molekulargewicht verringert, was jedoch eine stark reduzierte Verdickerwirkung zur Folge hatte.

Eine gängige Methode zur Reduzierung der Viskosität wäßriger Polyurethanverdickerlösungen ist die Zugabe wasserlöslicher, niedermolekularer Lösungsmittel wie z.B. wasserlöslichen ein- oder mehrwertigen Alkoholen. Ein gravierender Nachteil dieser Methode sind die Verschlechterung der anwendungstechnischen Eigenschaften, wie beispielsweise Streichfähigkeit oder Stabilität, sowie die erhöhte Emission flüchtiger Lösungsmittel.

Den geschilderten Nachteilen beim Einsatz niedermolekularer Lösungsmittel in Verdickungsmittelzubereitungen kann beispielsweise durch Anbieten und Verarbeiten des Verdickungsmittels in der festen Phase entsprochen werden. Die Nachteile einer solchen Konfektionierungsform sind allerdings zusätzliche Prozeßschritte sowohl bei der Herstellung als auch bei der anschließenden Verarbeitung des Verdickers. Im ersten Fall muß der Verdicker aus dem Reaktionsmedium isoliert und in die Pulverform überführt werden, während im letzten Fall das Pulver vor oder während des bestimmungsgemäßen Einsatzes durch Lösen oder Quellung zunächst in einc verarbeitungsgerechte Form überführt werden muß bevor die endgültige Anwendung möglich ist.

Die Möglichkeit einer Viskositätsreduzierung in den Verdickersystemem durch Zusatz größerer Mengen von Wasser erscheint unwirtschaftlich, da sie mit einer nachteiligen Verringerung der Wirkstoffkonzentration und damit einer erhöhten Dosierung im Anwendungsfall verbunden wäre.

Die **DE-A-43 10 702** beschreibt nun, daß zur Verringerung der Viskosität wäßriger Lösungen der Polyurethanverdicker alkoxylierte Alkohole oder Phenole zugesetzt werden können, die jedoch in hohen Konzentrationen verwendet werden müssen, um eine ausreichendc Herabsetzung der Eigenviskosität des Verdickers zu erreichen. Die Druckschrift offenbart weiterhin die Verwendung von 2,4,7,9-Tetramethyl-5-decin-4,7-diol als Mittel zur Viskositätssenkung in solchen Verdikkersystemem, das in Mengen von bis zu 25 Gew.-% eingesetzt werden muß.

Die **DE-A-36 30 319** beschreibt die Synthese von Verdickern auf Polyurethanbasis, die selbst schon über eine niedrige Eigenviskosität verfügen. Im Dokument wird die Verwendung ethoxylierter Alkohole als "Solubilisator" erwähnt. Als derartige Solubilisatoren sind beispielhaft das Anlagerungsprodukt von 60 mol Ethylenoxid (EO) an 1 mol Talgalkohol sowie das Anlagerungsprodukt von 12 mol EO an Nonylphenol offenbart.

In der **US-4,636,326** wird die Verwendung von Abmischungen bekannter Polyurethanverdicker mit Dimerfettsäureestern in wässrigen Hydraulikflüssigkeiten offenbart. Die Druckschrift erwähnt die Verwendung nichtionischer Tenside als Hilfsmittcl zur Dispersion von Additiven. Hinweise auf die Verwendung von Alkylpolyglycosiden zur Verringerung der Viskosität der Hydraulikflüssigkeiten oder die Erwähnung eines solchen Effekts können der Duckschrift nicht entnommen werden.

Aufgabe der Erfindung ist es daher unter Vermeidung der bisher geschilderten Nachteile eine Verdickungsmittelzubereitung zur Verfügung zu stellen, die sich durch eine geringe Eigenviskosität und damit leichte Handhabbarkeit auszeichnet. Gleichzeitig sollen jedoch die ursprünglichen Verdickungseigenschaften bei bestimmungsgemäßer Benutzung in wäßriger Lösung weitgehend erhalten bleiben.

Überraschenderweise wurde nun gefunden, daß schon ein etwa 10 Gew.-%iger Zusatz von Alkylpolyglykosiden mit niedrigem Oligomerisierungsgrad die Eigenviskosität wäßriger Zubereitungen von Verdickern soweit verringert. daß die wäßrigen Verdickungsmittelzubereitungen bequem handhabbar sind.

### Beschreibung der Erfindung

Gegenstand der Erfindung ist eine wäßrige Verdickungsmittelzubereitung, mindestens enthaltend ein organisches, wasserdispergierbares oder wasserlösliches, polymeres Verdickungsmittel und einen Viskositätssenker, mit der Maßgabe, daß der Viskositätssenker wenigstens eine Verbindung der Formel

**R**^{**1**}**O-[G]**_{**p**} **(I)**

in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 2 steht, enthält.

Unter wasserdispergierbaren oder wasserlöslichen Verdickungsmitteln werden insbesondere solche verstanden, die nach dem Assoziativmechanismus wirken. Hierzu zählen z.B. die teilweise mit langkettigen Fettalkoholen veretherten Polyacrylate und Polyacrylamide, langkettige Cellulosealkylether und insbesondere die Polyetherpolyurethane.

Die erfindungsgemäß bevorzugten Polyetherpolyurethane stellen im allgemeinen das Reaktionsprodukt von zwei mol Polyetherpolyolen mit je einer OH-Funktion mit einem mol an im Mittel zwei Isocyanatgruppen aufweisenden Molekülen darstellen.

Als Polyetherpolyole sind beispielsweise die Polymerisationsprodukte des Ethylenoxids, des Propylenoxids und/oder des Butylenoxids, deren Misch oder Pfropfpolymerisationsprodukte sowie die durch Kondensation von mehrwertigen Alkoholen oder Mischungen derselben und die durch Alkoxylierung von ein- oder mehrwertigen Alkoholen, Amiden, Polyamiden und Aminoalkoholen gewonnenen Polyether geeignet. Bevorzugterweise sind diese Polyetherpolyole so stark hydrophil, daß sie wasserlöslich sind. Zur Herstellung von Verdickungsmitteln werden in der Regel solche Polyetherpolyole benutzt, die zumindest überwiegend Polyalkylenglycole, bevorzugt Polyethylenglycole oder Polypropylenglycole enthalten. Die Zahl der im Polyalkylenglycol enthaltenen Polyoxyalkyleneinheiten kann dabei zwischen etwa 20 und etwa 400 schwanken, wobei sich die besten Ergebnisse bezüglich der Handhabbarkeit und der Wirkung bei einem mittleren Polyoxyalkylengruppengehalt von etwa 150 bis 250 erreichen lassen.

Als Isocyanattragendes Molekül kommen sowohl dic niedermolekularen, aliphatischen und/oder aromatischen Diisocyanate als auch durch Reaktionen mit bevorzugt zweiwertigen Alkoholen hergestellte, sogenannte "kettenverlängerte" Isocyanate infrage.

Beispielsweise seien als geeignete Isocyanate genannt 1,5 Naphtylendiisocyanat, 4,4'-Diphenylmethyndiisocyanat (MDI), hydriertes MDI (H₁₂ MDI), Xylylendiisocyanat (XDI), Tetramethylxyloldiisocyanat (TMXDI), Di- und Tetraalkyldiphenylmethandiisocyanat, 4,4'-Dibenzyldiisocyanat, 1,3-Phenylendiisocyanat, 1,4-Phenylendiisocyanat, die Isomere des Toluylendiisocyanats (TDI), gegebenenfalls in Mischung, 1-Methyl-2,4-diisocyanatocyclohexan, 1,6-Diisocyanato-2,2,4-trimethyl-hexan, 1-Isocyanatomethyl-3-isocyanato 1,5,5-trimethylcylohexan, chlor-ierte und bromierte Diisocyanate, phosphorhaltige Diisocyanate, Tetramethoxybutan-1,4-diisocyanat, Tetramethylen-1,4-diisocyanat, Penta-methylen-1,4-diisocyanat, Hexamethylen-1,4-diisocyanat (HDI), Phthal-säure-bis(isocyanatoethylester), Dicyclohexylmethandiisocyanat, 1,12-Diisocyanatododecan und Dimerfettsäurediisocyanat.

Als Dimerfettsäure bezeichnct man ein Gemisch von überwiegend C₃₆-Carbonsäuren, das durch thermischc oder katalytische Dimerisierung ungesättigter C₁₈-Monocarbonsäuren, wie Ölsäure, Tallölfettsäure oder Linolsäure hergestellt wird. Die Dimerfettsäure läßt sich zu Dimerfettsäurediisocyanaten mit im Mittel zwei Isocyanatgruppen pro Molekül umsetzen.

Neben den niedermolekularen Polyisocyanaten können auch die kettenverlängerten Isocyanate zum Einsatz gelangen. Diese Form der Polyisocyanate ist erhältlich durch Umsetzen von etwa x mol eines bevorzugt im Mittel difunktionellen Alkohols mit etwa x+1 mol eines im Mittel difunktionellen Diisocyanats. Die Zahl der Isocyanatgruppen im Reaktionsprodukt beträgt im Mittel immer zwei, während das Molgewicht des resultierenden Diisocyanats mit zunehmendem x ansteigt. Als difunktionelle Alkohole kommen Glycole wie Ethylenglycol, Propylenglycol, Butylenglycol und deren höhere Homologe infrage. Ebenso geeignet sind die Dimeralkohole, die durch Reduktion der Ester der Dimerfettsäure erhältlich sind. Auch solche Alkohole und Alkoholschnitte die beispielsweise durch die Umesterung von Triglyceriden mit mono-, di- oder trifunktionellen Alkoholen erzeugt werden, und die im Mttel difunktionell sind können zur Darstellung der Verdicker eingesetzt werden. Bevorzugt werden jedoch die Addukte des Ethylenoxids und/oder des Propylenoxids an difuktionelle Alkohole wie Ethylengklycol, Propylenglycol oder Butylenglycol, wobei die Zahl der angelagerten Alkylenoxidgruppen zwischen 1 und 500, bevorzugt zwischen 10 und 200 und besonders bevorzugt zwischen 20 und 150 beträgt, zur Kettenverlängerung der Isocyanate eingesetzt. Insbesondere bevorzugt sind dabei solche Reaktionsprodukte, bei denen x = 1 oder x = 2 gewählt wurde.

Die auf diese Weise erhältlichen, kettenverlängerten Diisocyanate werden in der Regel mit monofunkionellen Polyetherpolyolen umgesetzt.
Bei diesen Polyetherpolyolen handelt es sich vozugsweise um die Additionsprodukte von alpha-Epoxiden mit 2 bis 24 C-Atomen an monofunktionelle Alkhole mit 1 bis 24, vorzugsweise 6 bis 18 C-Atomen. Die resultierenden Polyetherpolyole können sowohl Homo- als auch Co- und Mischpolymerisationsprodukte sein.

Das NCO/OH-Verhältnis liegt in der Regel zwischen etwa 0,9 und 1,1/1, wobei ein Verhältnis von etwa 1/1 bevorzugt ist.

Die Polyurethanmoleküle sind bevorzugt linear aufgebaut und weisen in der Regel ein mittleres Molekulargewicht von 5.000 bis 500.000 auf, wobei es für bestimmte Einsatzzwecke sinnvoll sein kann, das Molekulargewicht auf ein Maximum von 100.000 oder 10.000 zu begrenzen.

Alkyl- und Alkenyloligoglykoside stellen bekannte nichtionische Tenside dar, die der Formel (I) folgen,

**R**^{**1**}**O-[G]**_{**p**} **(I)**

in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 2 steht. Sie können nach den einschlägigen Verfahren der präparativen organischen Chemie erhalten werden. Stellvertretend für das umfangreiche Schrifttum sei hier auf die Schriften **EP-A1-0 301 298** und **WO 90/03977** verwiesen.

Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl-und/ oder Alkenyloligoglykoside sind somit Alkyl- und/oder Alkenyloligo**glucoside**.

Die Indexzahl p in der allgemeinen Formel **(I)** gibt den Oligomerisierungsgrad (DP-Grad), d. h. die Verteilung von Mono- und Oligoglykosiden an und steht für eine Zahl zwischen 1 und 2. Während p in einer gegebenen Verbindung stets ganzzahlig sein muß und hier vor allem die Werte p = 1 oder 2 annehmen kann, ist der Wert p für ein bestimmtes Alkyloligoglykosid einc analytisch ermittelte rechnerische Größe, die meistens eine gebrochene Zahl darstellt. Vorzugsweise werden Alkyl und/oder Alkenyloligoglykoside mit einem mittleren Oligomerisierungsgrad p von 1 bis 1,8 eingesetzt.

Gegebenenfalls kann es beim Einsatz der Monoglycosidc trotz anfänglich guter viskositätssenkender Eigenschaften zu Verdickungserscheinungen bei längerer Lagerung kommen. Es hat sich daher als vorteilhaft erwiesen, auf Polyglycoside mit einem Oligomerisierungsgrad von 1,1 bis 1,5 zurückzugreifen.

Der Alkyl- bzw. Alkenylrest R¹ kann sich von primären Alkoholen mit 4 bis 11, vorzugsweise 8 bis 10 Kohlenstoffatomen ableiten. Typische Beispiele sind Butanol, Capronalkohol, Caprylalkohol, Caprinalkohol und Undecylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese erhalten werden. Bevorzugt sind Alkyloligoglucoside der Kettenlänge C₈-C₁₀ (DP = 1 bis 2), die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyl-oligoglucoside auf Basis technischer C_{9/11}-Oxoalkohole (DP = 1 bis 2).

Die erfindungsgemäßen Verdickungsmittelzubereitungen enthalten den entsprechenden Verdicker, dcn Viskositätssenker sowie Wasser und gegebenenfalls weitere Zusatzstoffe in geringen Mengen.

Erfindungsgemäß bevorzugt sind solche Verdickungsmittelzubereitungen, die im wesentlichen 1 bis 50 Gew.-% Viskositätssenker, 5 bis 99 Gew.-% organisches, wasserdispergierbares oder wasserlösliches, polymeres Verdickungsmittel sowie 0 bis 94 Gew.-%, bevorzugt 0 bis 84 Gew.-% Wasser enthalten. In einer bevorzugten Ausführungsform enthält die Verdickungsmittelzubereitung 5 bis 20 Gew.-% Viskositätssenker, 10 bis 50 Gew.-% Verdickungsmittel, 30 bis 85 Gew.-% Wasser sowie gegebenenfalls Zusatz- und Hilfsstoffe.
Die Anteile der genannten Komponenten addieren sich in der Regel auf ungefähr 100 Gew.-%, wobei der fehlende Anteil vorzugsweise aus üblichen Zusatzstoffen besteht und 5 Gew.-%, insbesonderc 2 Gew.-% nicht übersteigt. Hierzu zählen z.B. Biozide, geringe Mengen flüchtiger Lösungsmittel sowie gegebenenfalls Antioxidantien.

Bevorzugt enthält die Verdickungsmittelzubereitung ein Verdickungsmittel, das Urethangruppen aufweist.
Die erfindungsgemäßen Verdickungsmittelzubereitungen zeichnen sich dadurch aus, daß sie trotz ihrer geringen Viskosität wenig opake, homogene Lösungen des Verdickers im wässrigen Medium ergeben. Ausflockungsphänomene, die in polymeren Beschichtungen zu vermindertem Glanz führen können. treten in der Regel nicht auf. Die erfindungsgemäßen Viskositätssenker in der Verdickungsmittelzubereitung üben in der Regel keinen nachteiligen Effekt auf die Wirksamkeit des Verdickungsmittels in der Einsatzkonzentration aus. Die verdickten Produkte zeigen bei der Zubereitung unabhängig von der Anwesenheit des Viskositätssenkers ein im Vergleich nahezu identisches rheologisches Verhalten, das sich durch weitgehende Scherkraftunabhängigkeit des Verdickungseffekts auszeichnet.

Ein weiterer Gegenstand der Erfindung ist daher die Verwendung von wäßrigen Verdickungsmittelzubereitungen in Beschichtungsstoffen auf Basis wäßriger Dispersionen.

Weiterhin befaßt sich die Erfindung mit wässrigen Dispersionsfarben. enthaltend neben Pigmenten, Bindemitteln. Lösungsmitteln und gegebenenfals weiteren Zusatzstoffen eine erfindungsgemäße Verdickungsmittelzubereitung.

Die Verdickungsmittelzubereitungen können jedoch ebenso in allen anderen wäßrigen Medien zum Einsatz kommen. in denen eine effektive Verdickung verlangt wird. Hierbei sind Produkte zum technischen Einsatz. wie beispielsweise wäßrige Hydraulikflüssigkeiten ebenso inbegriffen wie Produkte zur persönlichen- und Haushaltshygiene sowie der Kosmetik.

Die Erfindung befaßt sich außerdem mit der Verwendung von Substanzen der Formel

**R**^{**1**}**O-[G]**_{**p**} **(I)**

in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 2 steht.
als Viskositätssenker in wässrigen Verdickungsmittelzubereitungen.

### Beispiele

Um die viskositätssenkende Wirkung der Viskositätsregulatoren zu überprüfen, wurde die Viskosität einer 18,2 %igen Lösung eines Verdickers auf Polyurethanbasis (NOPCO® 3116, Henkel) in Wasser ohne Zusätze und mit jeweils 10 % Viskositätssenker bestimmt (Brookfield, 25°C, 20 U/min, Spindel 3 - 6) (Tabelle 1).

Als Viskositätssenker wurden Alkylpolyglycoside mit mittlerem Oligomerisierungsgrad 1 bis 1,6, sowie zum Vergleich drei konventionelle Viskositätssenker eingesetzt.

**Tabelle 1**

| **Viskositätssenker** | **Viskosität [mPas]** | **Aussehen** |
|---|---|---|
| - | 82.000 | weißlich opak |
| Propylenglykol | 50.000 | weißlich opak |
| Butylendiglykol | 14.000 | weißlich opak |
| Texin DOS 75 | 30.000 | weißlich opak |
| Glucopon 225 | 9400 | leicht opak |
| Glucopon 215 | 8000 | leicht opak |
| Plantaren 700 | 4800 | leicht opak |
| C₈-Mono | 3300 | weißlich opak |
| C₁₀-Mono | 5000 | gelb, klar |
| C₁₂-Mono | n.m. verdickt | weiß |

| | | |
|---|---|---|
| Texin DOS 75 | Na-di-iso-C₈-Sulfosuccinat | n.m. = nicht meßbar |
| Glucopon 225 | C_{8/10}-Glucosid_{1,6} | |
| Glucopon 215 | C_{8/10}-Glucosid_{1,5} | |
| Plantaren 700 | C_{8/10}-Glucosid_{1,4} | |
| C₁₀-Mono | C₁₀-Monoglucosid | |
| C₈-Mono | C₈-Monoglucosid | |
| C₁₂-Mono | C₁₂-Monoglucosid | |

## Patentansprüche

1. Wäßrige Verdickungsmittelzubereitung, mindestens enthaltend ein organisches, wasserdispergierbares oder wasserlösliches, polymeres Verdikkungsmittel und einen Viskositätssenker, dadurch gekennzeichnet, daß der Viskositätssenker wenigstens cine Verbindung der Formel
**R**^{**1**}**O-[G]**_{**p**} **(I)**
in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 2 steht, umfaßt.

2. Verdickungsmittelzubereitung nach Anspruch 1, dadurch gekennzeichnet, daß im wesentlichen 1 bis 50 Gew.-% Viskositätssenker, 5 bis 99 Gew.-% organisches, wasserdispergierbares oder wasserlösliches, polymeres Verdikkungsmittel sowie 0 bis 84 Gew.-% Wasser und gegebenenfalls Zusatz- und/oder Hilfsstoffe enthalten sind.

3. Verdickungsmittelzubereitung nach einem der Ansprüche 1 oder 2, dadurch gekennzeichnet, daß das Verdickungsmittel Urethangruppen aufweist.

4. Verwendung von wäßrigen Verdickungsmittelzubereitungen nach einem der Ansprüche 1 bis 3 in Bcschichtungsstoffen auf Basis wässriger Dispersionen.

5. Wässrige Dispersionsfarbe, enthaltend neben Pigmenten, Bindemitteln, Lösungsmitteln und gegebenenfalls weiteren Zusatzstoffen eine Verdickungsmittelzubereitung nach einem der Ansprüche 1 bis 3.

6. Verwendung von Substanzen der Formel
**R**^{**1**}**O-[G]**_{**p**} **(I)**
in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis steht,
als Viskositätssenker in wässrigen Verdickungsmittelzubereitungen.

## Claims

1. An aqueous thickener formulation at least containing an organic water-dispersible or water-soluble polymeric thickener and a viscosity reducer, characterized in that the viscosity reducer contains at least one compound corresponding to formula (I):
**R**^{**1**}**O-[G]**_{**p**} **(I)**
in which R¹ is an alkyl and/or alkenyl radical containing 4 to 22 carbon atoms, G is a sugar unit containing 5 or 6 carbon atoms and p is a number of 1 to 2.

2. A thickener formulation as claimed in claim 1, characterized in that it essentially contains 1 to 50% by weight of viscosity reducer, 5 to 99% by weight of organic, water-dispersible or water-soluble polymeric thickener, 0 to 84% by weight of water and optionally additives and/or auxiliaries.

3. A thickener formulation as claimed in claim 1 or 2, characterized in that the thickener contains urethane groups.

4. The use of the aqueous thickener formulations claimed in any of claims 1 to 3 in coating compositions based on aqueous dispersions.

5. An aqueous emulsion paint containing the thickener formulation claimed in any of claims 1 to 3 in addition to pigments, binders, solvents and optionally other additives.

6. The use of compounds corresponding to formula (I):
**R**^{**1**}**O-[G]**_{**p**} **(I)**
in which R¹ is an alkyl and/or alkenyl radical containing 4 to 22 carbon atoms, G is a sugar unit containing 5 or 6 carbon atoms and p is a number of 1 to 2,
as viscosity reducers in aqueous thickener formulations.

## Revendications

1. Préparation aqueuse d'épaississant, renfermant au moins un épaississant polymère organique, dispersible ou soluble dans l'eau et un abaisseur de viscosité, caractérisée en ce que l'abaisseur de viscosité contient au moins un composé de la formule
**R**^{**1**}**O-[G]**_{**p**} **(I)**
dans laquelle R¹ représente un radical alkyle et/ou alcényle comportant 4 à 22 atomes de carbone, G correspond à un radical de sucre possédant 5 ou 6 atomes de carbone et p est un nombre de 1 à 2.

2. Préparation d'épaississant selon la revendication 1, caractérisée en ce qu'elle renferme essentiellement 1 à 50 % en poids d'abaisseur de viscosité, 5 à 99 % en poids d'épaississant polymère organique, dispersible ou soluble dans l'eau, ainsi que 0 à 84 % en poids d'eau et éventuellement, des additifs et/ou des adjuvants.

3. Préparation d'épaississant selon une des revendications 1 ou 2, caractérisée en ce que l'épaississant présente des groupes uréthane.

4. Utilisation de préparations aqueuses d'épaississant selon une des revendications 1 à 3 dans des matières d'enduction à base de dispersions aqueuses.

5. Peinture à dispersion aqueuse, renfermant une préparation d'épaississant conforme à une des revendications 1 à 3, en plus de pigments, de liants, de solvants et, éventuellement, d'autres additifs.

6. Utilisation de substances de la formule
**R**^{**1**}**O-[G]**_{**p**} **(I)**
dans laquelle R¹ représente un radical alkyle et/ou alcényle comportant 4 à 22 atomes de carbone, G correspond à un radical de sucre possédant 5 ou 6 atomes de carbone et p est un nombre de 1 à 2, comme abaisseurs de viscosité dans des préparations aqueuses d'épaississant.
